# EUROPÄISCHE PATENTSCHRIFT

(11) **EP 3 608 994 B1**
(45) Veröffentlichungstag und Bekanntmachung des Hinweises auf die Patenterteilung: **09.09.2026**
(21) Anmeldenummer: 19189438.5
(22) Anmeldetag: 31.07.2019
(51) Int. Cl.: H01M 50/296, H01M 50/50, H01M 50/514

(54) **VERBINDUNGSELEMENT FÜR HOCHVOLT-BATTERIEMODUL, ANORDNUNG MIT EINEM SOLCHEN VERBINDUNGSELEMENT**
CONNECTING ELEMENT FOR HIGH-VOLTAGE BATTERY MODULE, ASSEMBLY COMPRISING SUCH A CONNECTING ELEMENT VOLTAGE BATTERY MODULE AND A FURTHER ELEMENT
ÉLÉMENT DE RACCORDEMENT POUR MODULE DE BATTERIE HAUTE TENSION, AGENCEMENT DOTÉ D'UN TEL ÉLÉMENT DE RACCORDEMENT

(30) Priorität: 10.08.2018 DE 102018119547
(43) Veröffentlichungstag der Anmeldung: 12.02.2020
(73) Patentinhaber: Volkswagen AG, 38440 Wolfsburg (DE)
(72) Erfinder: LUEKE, Marwin, 38112 Braunschweig (DE); KNEISEL, Michael, 38822 Halberstadt (DE); KOCHANSKI, André, 38100 Braunschweig (DE); BODE, Lars-Gerit, 38518 Gifhorn (DE)
(74) Vertreter: Freischem & Partner Patentanwälte mbB

(56) Entgegenhaltungen:
- EP-A1- 3 229 323
- EP-A2- 2 159 888
- CN-U- 207 165 675
- CN-U- 207 637 877
- DE-A1- 102014 017 869
- DE-T5- 112007 000 902
- US-A1- 2014 113 474

## Beschreibung

Die Erfindung betrifft ein Verbindungselement für ein Hochvolt-Batteriemodul und eine Anordnung eines Verbindungselements zwischen einem Hochvolt-Batteriemodul und einem weiteren Element.

Ein Hochvolt-Batteriemodul ist insbesondere für den Antrieb eines Fahrzeuges vorgesehen. Ein derartiges Hochvolt-Batteriemodul im Sinne der Erfindung, welches auch als ein Traktionsbatteriemodul bezeichnet wird, weist Nennspannungen im Bereich von 300 V bis 1200 V auf. In einem Hochvolt-Batteriemodul sind üblicherweise zwischen 90 und 120 Batteriezellen angeordnet, welche jeweils eine Spannung im Bereich von 2 V bis 10 V liefern. Die Leistung eines solchen Hochvolt-Batteriemoduls liegt bei etwa 120 kW bis 480 kW. Bevorzugte Abmessungen eines Hochvolt-Batteriemoduls im Sinne der Erfindung liegen bei mindestens 50 x 25 cm, insbesondere in einem Bereich zwischen diesem Wert und 100 cm x 50 cm oder 100 cm x 100 cm. Das Gewicht liegt insbesondere bei mindestens 20 kg, vorzugsweise mindestens 50 kg und kann auch mindestens 80 kg, 90 kg oder mindestens 100 kg betragen.

Mit einem Fahrzeug sind vorliegend insbesondere Krafträder und Kraftfahrzeuge gemeint, wobei diese Fahrzeuge zumindest in bestimmten Betriebsphasen - oder auch ausschließlich - elektrisch mittels des Batteriemoduls angetrieben werden, d.h. die Erfindung betrifft insbesondere Hybridfahrzeuge oder reine Elektrofahrzeuge.

Aus DE 10 2015 109 871 A1 ist ein Batteriesystem mit einem Batteriegehäuse zur Aufnahme eines oder mehrerer miteinander verschalteter Batteriemodule und eine Steckeranordnung mit einem Steckerteil und einer Steckeraufnahme bekannt, wobei die Gehäusewandung des Batteriegehäuses doppelwandig mit einer Innenwand und einer davon beabstandeten Außenwand ausgebildet ist. Dabei ist die Steckeraufnahme derart in die Gehäusewandung integriert, dass die zur Aufnahme des Steckerteils geeignete Steckerbuchse der Steckeraufnahme gegenüber der Außenwand des Batteriegehäuses zurückspringend, d.h. innenliegend, angeordnet ist. Dieses Dokument offenbart keine Details zur Verbindung der Batteriemodule untereinander.

Aus DE 10 2012 201 420 A1 ist ein Hochvoltsteckverbindersystem bekannt. Das Hochvoltsteckverbindersystem umfasst eine separat ausgebildete Gehäusedichtung, die eine Ausnehmung aufweist, und einen Hochvoltsteckverbinder mit einem elektrischen Leiter. Dabei ist der Hochvoltsteckverbinder derart durch die Ausnehmung der Gehäusedichtung geführt, dass die Gehäusedichtung den Hochvoltsteckverbinder umgreift. Dabei ist auch eine Niedervoltdurchführung zur Durchführung eines Niedervoltsteckerbinders vorgesehen. Das Hochvoltsteckverbindersystem weist eine Vielzahl von Einzelelementen auf und ist dementsprechend aufwändig in Bezug auf dessen Herstellung und Montage.

Aus DE 10 2014 017 869 A1 ist eine Steckereinrichtung zum elektrischen Verbinden zweier Batterieeinheiten eines Kraftfahrzeugs bekannt, die zwei elektrisch leitende Kontaktelemente, ein elektrisch leitendes Leiterelement und eine Isoliereinrichtung aufweist, wobei die Isoliereinrichtung als Gehäuseelement ausgebildet ist. Dabei weist das Leiterelement eine u-förmige Geometrie auf. Die jeweiligen Kontaktelemente weisen zwei Lamellen auf, zwischen welchen das korrespondierende Kontaktelement der jeweiligen Batterieeinheit zum elektrischen Verbinden einschiebbar ist. Auch diese Steckereinrichtung weist Nachteile hinsichtlich der Montage auf, weil zunächst zwei zu verbindende Batterieeinheiten in einer Verbindungsrichtung relativ zueinander den richtigen Abstand aufweisen müssen und dann die Steckereinrichtung senkrecht zur Verbindungsrichtung eingeschoben wird.

Aus EP 3 229 323 A1 ist ein Adapter für eine elektrische Verbinderbuchse bekannt, welcher zwischen einem Hochspannungsgerät und einem Kabel mit einem Anschluss eingesetzt werden soll. Der Adapter weist einen Grundkörper aus isolierendem Material auf, welcher ein erstes Ende aufweist, welches zur Herstellung einer dichten Verbindung mit der weiblichen Steckerbuchse dienen soll. Ferner weist der Grundkörper ein zweites Ende auf, welches zur Herstellung einer Verbindung mit einem weiblichen Anschluss des Kabels dienen soll.

Aus CN 207 165 675 U ist ein Hochvolt-Verbindungelement für zwei Batteriemodule eines Batteriepackages bekannt. Das Hochvolt-Verbindungselement weist zwei Elemente zur Herstellung jeweils einer Steckverbindung mit einem Batteriemodul auf. Diese zwei Elemente weisen Steckrichtungen auf, die in die gleiche Richtung orientiert sind. Aus DE 11 2007 000902 T5 ist ein Mehrfachheizgerät-Steuerungssystem bekannt. Dieses System umfasst einen Steckdosensteckverbinder, welcher zwei Stromversorgungsstifte für hohe Spannungen und zwei Stifte für Signalschaltungsanlagen mit niedrigen Spannungen aufweist.

Aus EP 2 159 888 A2 ist ein Verbindungselement bekannt, welches zwei lösbar miteinander verbindbare Gehäuseteile aufweist, die zur Umschließung eines Hochvolt-Stromkreises dienen sollen. Die Gehäuseteile weisen zudem jeweils damit verbundene Verbinder auf, die zur Herstellung eines Niederspannungs-Stromkreises dienen sollen.

Aus CN 207637877 U ist ferner eine Verbindungsvorrichtung für ein Batteriemodulgehäuse bekannt. Die Verbindungsvorrichtung umfasst ein Gehäuse, einen fest mit der Box verbundenen Verbindungsblock mit einem ersten Seitenarm und einen zweiten Seitenarm und eine Abdeckung, die fest mit dem Verbindungsblock verbunden ist.

Aus US 2014/0113474 A1 ist außerdem ein elektrischer Stecker mit einem Außengehäuse, einem Innengehäuse und einer Dichtung bekannt. Die Dichtung umfasst eine erste Dichtungsvorrichtung, die derart zwischen dem äußeren Gehäuse und dem Innengehäuse angeordnet ist, dass zwischen einer Innenseite des äußeren Gehäuses und der ersten Dichtungsvorrichtung ein Aufnahmespalt für ein Gehäuse eines Gegensteckers ausgebildet ist.

Der Erfindung liegt die Aufgabe zugrunde, ein Verbindungselement für ein Hochvolt-Batteriemodul und eine Anordnung eines Verbindungselements zwischen einem Hochvolt-Batteriemodul und einem weiteren Element zur Verfügung zu stellen, welche die Herstellung einer elektrisch leitenden Verbindung in besonders einfacher Art und Weise ermöglicht.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßes Verbindungselement für ein Hochvolt-Batteriemodul weist einen Grundkörper auf, wobei an dem Grundkörper ein erster Hochvolt-Eingang und ein zweiter Hochvolt-Eingang vorgesehen sind. Der erste Hochvolt-Eingang und der zweite Hochvolt-Eingang sind elektrisch leitend miteinander verbunden oder ermöglichen die Herstellung einer elektrisch leitenden Verbindung. Der erste Hochvolt-Eingang und der zweite Hochvolt-Eingang sind jeweils als Steckverbindung ausgebildet, wobei die erste Hochvolt-Steck-Verbindungsrichtung (HS1) des ersten Hochvolt-Eingangs und die zweite Hochvolt-Steck-Verbindungsrichtung (HS2) des zweiten Hochvolt-Eingangs entgegengesetzt orientiert sind und eine gemeinsame Steckachse (S) aufweisen. Für den ersten Hochvolt-Eingang ist ein quer zur ersten Hochvolt-Steck-Verbindungsrichtung (HS1) radial hervorragendes erstes Anschlagelement mit einer ersten Anschlagfläche vorgesehen und für den zweiten Hochvolt-Eingang ist ein quer zur zweiten Hochvolt-Steck-Verbindungsrichtung (HS2) radial hervorragendes zweites Anschlagelement mit einer zweiten Anschlagfläche vorgesehen. Die erste Anschlagfläche und/oder die zweite Anschlagfläche ist dabei jeweils durch eine Dichtung gebildet oder jeweils mit einer Dichtung versehen.

Mit anderen Worten ausgedrückt, ist an gegenüberliegenden Seiten des Grundkörpers des Verbindungselementes jeweils ein Hochvolt-Eingang ausgebildet, so dass das Verbindungselement zwischen einem Hochvolt-Batteriemodul und einem weiteren Element zur Herstellung einer elektrisch leitenden Verbindung eingesetzt werden kann. Mit einem weiteren Element ist vorliegend insbesondere ein baugleiches Hochvolt-Batteriemodul, ein anderes Batteriemodul, eine Steuerung oder ein weiteres Funktionselement gemeint, wie beispielsweise ein Wärmetauscher oder eine Messvorrichtung.

Wie im Folgenden in Zusammenhang mit einem Verfahren noch näher erläutert wird, wird beispielsweise das Hochvolt-Batteriemodul in der ersten Hochvolt-Steck-Verbindungsrichtung HS1 mit dem Verbindungselement zusammengesteckt und von der gegenüberliegenden Richtung wird ein weiteres Element in der zweiten Hochvolt-Steck-Verbindungsrichtung HS2 aufgesteckt. Da HS1 und HS2 eine gemeinsame Steckachse (S) aufweisen, erfolgt das Zusammenstecken der drei vorstehend genannten Bauteile (Hochvolt-Batteriemodul - Verbindungselement - weiteres Element) entlang dieser Steckachse (S). Das Hochvolt-Batteriemodul und das andere Element weisen entsprechende elektrische Schnittstellen mit Kontakten auf, welche jeweils korrespondierend zu dem ersten Hochvolt-Eingang und dem zweiten Hochvolt-Eingang ausgebildet sind.

Damit ermöglicht das erfindungsgemäße Verbindungselement die Herstellung einer elektrisch leitenden Verbindung zwischen zwei Hochvolt-Batteriemodulen oder zwischen einem Hochvolt-Batteriemodul und einem weiteren Element in einfacher Weise durch Zusammenstecken in Richtung der Steckachse (S). Durch die Möglichkeit des beiderseitigen Steckens kann auf den montagebedingten Einsatz von weiteren Elementen sowie auf den Einsatz von Werkzeug zur Herstellung der elektrischen Verbindung verzichtet werden. Das Verbindungselement ermöglicht insbesondere eine automatisierte Kontaktierung eines Hochvolt-Batteriemoduls mit dem weiteren Element durch einfaches Zusammenschieben eines Hochvolt-Batteriemoduls mit einem eingesteckten Verbindungselement und einem weiteren Element, wobei das weitere Element auch ein baugleiches Hochvolt-Batteriemodul sein kann.

Erfindungsgemäß ist für den ersten Hochvolt-Eingang ein quer zur ersten Hochvolt-Steck-Verbindungsrichtung radial hervorragendes erstes Anschlagelement mit einer ersten Anschlagfläche vorgesehen und für den zweiten Hochvolt-Eingang ein quer zur zweiten Hochvolt-Steck-Verbindungsrichtung radial hervorragendes zweites Anschlagelement mit einer zweiten Anschlagfläche. Die erste Anschlagfläche und die zweite Anschlagfläche sind vorzugsweise radial vollständig umlaufend um den Grundkörper ausgebildet. Die Anschlagelemente dienen unter anderem bei der Montage dazu, dass die Steckverbindung zwischen dem Verbindungselement und dem Hochvolt-Batteriemodul bzw. zwischen dem Verbindungselement und einem weiteren Element weit genug in Steckrichtung HS1 bzw. HS2 ausgeführt wird und wirken gleichzeitig einem zu tiefen Einstecken bzw. einem zu weiten Aufstecken und einer dadurch etwaigen Beschädigung der Kontakte entgegen.

Im Bereich der vorstehend genannten, ersten Anschlagfläche und/oder zweiten Anschlagfläche ist insbesondere jeweils eine Dichtung vorgesehen. Die Dichtung dient zum einen zur Abdichtung der jeweiligen Hochvolt-Steckverbindung und gegebenenfalls der Niedervolt-Steckverbindung gegenüber Umwelteinflüssen, wie Feuchtigkeit und/oder Gasen. Weiterhin erfüllt die Dichtung die Funktion eines Toleranzausgleiches in Richtung der Steckachse (S). Durch eine gewisse Elastizität der Dichtung bzw. der Dichtungen in Richtung der Steckachse (S) können bei Abweichungen der Maße des Hochvolt-Batteriemoduls und eines damit verbundenen weiteren Elements diese Abweichungen in einem bestimmten Toleranzbereich (Toleranzfenster) ausgeglichen werden. Wenn jeweils eine Dichtung an der ersten Anschlagfläche und eine Dichtung an der zweiten Anschlagfläche ausgebildet oder angeordnet sind, kann eine automatische Zentrierung des Verbindungselementes zwischen dem Hochvolt-Batteriemodul und dem weiteren Element bewirkt werden. Die Dichtung ist insbesondere aus Silikon oder Ethylen-Propylen-Dien-Kautschuk (EPDM) hergestellt und weist eine hohe Medienbeständigkeit auf. Insbesondere kann die Dichtung in radialer Richtung betrachtet zwei oder mehrere Dichtlippen aufweisen, um die Dichtwirkung zu erhöhen.

In einer praktischen Ausführungsform eines erfindungsgemäßen Verbindungselementes sind an dem Grundkörper ein erster Niedervolt-Eingang und ein zweiter Niedervolt-Eingang vorgesehen, wobei der erste Niedervolt-Eingang und der zweite Niedervolt-Eingang jeweils als Steckverbindung ausgebildet sind. Die erste Niedervolt-Steck-Verbindungsrichtung (NS1) und die zweite Niedervolt-Steck-Verbindungsrichtung (NS2) sind entgegengesetzt orientiert und weisen die gleiche Steckachse (S) auf wie der erste Hochvolt-Eingang und der zweite Hochvolt-Eingang. Durch ein solches Verbindungselement, welches sowohl zwei Hochvolt-Eingänge als auch zwei Niedervolt-Eingänge aufweist, wird die Anzahl an benötigten Bauteilen insgesamt sehr gering gehalten. Die jeweiligen Hochvolt-Verbindungen und Nieder-Voltverbindungen werden mittels nur eines gemeinsamen Verbindungselementes hergestellt, wodurch nicht nur wenig Bauraum erforderlich ist, sondern auch die Montage einfach gehalten wird, weil nur ein Verbindungselement richtig ausgerichtet werden muss, um die entsprechende Steckverbindung herzustellen. Zudem kann eine elektrisch leitende Verbindung zwischen einem Hochvolt-Batteriemodul und einem weiteren Element sowohl auf der Hochvolt-Ebene als auch auf der Niedervolt-Ebene in nur einem Montageschritt durch Zusammenstecken hergestellt werden.

Über das Verbindungselement werden insbesondere zwei Hochvolt-Kontakte eines Hochvolt-Batteriemoduls und eines weiteren Elements elektrisch leitend miteinander verbunden. Unter dem Begriff Hochvolt werden dabei Spannungen von über 300 V verstanden und insbesondere die Nennspannung des Hochvolt-Batteriemoduls. Über die Niedervolt-Eingänge wird insbesondere eine Spannung im Bereich von 2 V bis 10 V übertragen, welche der Spannung der einzelnen, in einem Hochvolt-Batteriemodul angeordneten Batteriezellen entspricht. Alternativ können auch andere Spannungen deutlich unterhalb von 100 V vorgesehen sein, die durch Zellverbünde mehrerer Batteriezellen bereitgestellt werden.

In einer weiteren praktischen Ausführungsform eines erfindungsgemäßen Verbindungselementes sind die erste Anschlagfläche und die zweite Anschlagfläche durch einen Mittelabschnitt gebildet, der zwischen dem ersten Hochvolt-Eingang und dem zweiten Hochvolt-Eingang angeordnet ist. Der Mittelabschnitt weist einen gegenüber dem ersten Hochvolt-Eingang und dem zweiten Hochvolt-Eingang vergrößerten Außenumfang auf. Vorzugsweise sind der Mittelabschnitt sowie der erste Hochvolt-Eingang und der zweite Hochvolt-Eingang sowie der optionale erste Niedervolt-Eingang und der zweite Niedervolt-Eingang einstückig ausgebildet. Eine derartige Gestaltung ermöglicht es, das Verbindungselement als kostengünstiges Bauteil zu produzieren. Insbesondere ist das Verbindungselement mit dem Mittelabschnitt sowie dem ersten Hochvolt-Eingang und dem zweite Hochvolt-Eingang sowie dem optional ersten Niedervolt-Eingang und dem zweiten Niedervolt-Eingang einstückig aus Kunststoff hergestellt, vorzugsweise aus Polybutylenterephthalat (PBT).

Das Verbindungselement ist besonders sicher, insbesondere im Hinblick auf die Anforderungen des Berührschutzes, wenn der erste Hochvolt-Eingang und der zweite Hochvolt-Eingang des Verbindungselementes jeweils als weibliches Steckverbindungselement ausgebildet sind. Der erste Hochvolt-Eingang und der zweite Hochvolt-Eingang sind entsprechend jeweils als Hochvolt-Kontaktöffnung ausgebildet, welche zur Aufnahme korrespondierender Hochvolt-Kontakte an einem Hochvolt-Batteriemodul oder einem weiteren Element dienen. Bevorzugt sind ebenfalls ein erster Niedervolt-Eingang und ein zweiter Niedervolt-Eingang als weibliches Steckverbindungselement ausgebildet und weisen entsprechend Niedervolt-Kontaktöffnungen auf. Wenn das Verbindungselement bereits über den ersten Hochvolt-Eingang und optional mit dem ersten Niedervolt-Eingang mit einem Hochvolt-Batteriemodul verbunden ist, wird durch die Ausbildung des zweiten Hochvolt-Eingangs und optional des zweiten Hochvolt-Eingangs als weibliches Steckverbindungselement einer versehentlichen Berührung eines elektrischen Kontakts, an dem möglicherweise bereits eine Spannung anliegt, während der Montage entgegengewirkt. Die Kontaktöffnungen sind insbesondere derart klein ausgewählt, dass diese von außen nicht zugänglich sind. Insbesondere beträgt die größte Quererstreckung der Kontaktöffnungen maximal 80 mm, bevorzugt maximal 75 mm und besonders bevorzugt maximal 50 mm.

Die Erfindung betrifft auch eine Anordnung mindestens eines wie vorstehend beschriebenen Verbindungselements zwischen einem Hochvolt-Batteriemodul und einem weiteren Element, wobei das Hochvolt-Batteriemodul und das weitere Element durch eine jeweilige Steckverbindung mit dem Verbindungselement mittels des ersten Hochvolt-Eingangs und des zweiten Hochvolt-Eingang des Verbindungselements unmittelbar elektrisch miteinander gekoppelt sind. Bei dem weiteren Element handelt es sich vorliegend insbesondere um ein baugleiches Hochvolt-Batteriemodul, ein anderes Batteriemodul, eine Steuerung, oder ein anderes Funktionselement mit einem kompatiblen Hochvolt-Kontakt. Durch die Möglichkeit einer beiderseitigen Steckverbindung kann die erfindungsgemäße Anordnung besonders leicht hergestellt werden.

Insbesondere weisen das Hochvolt-Batteriemodul und das weitere Element jeweils mindestens eine Öffnung auf, in welche das Verbindungselement jeweils eingesteckt ist. Bevorzugt sind die Hochvolt-Kontakte und optional auch die Niedervolt-Kontakte derart in der Öffnung angeordnet, dass sie gegenüber dem Hochvolt-Batteriemodul nicht hervorragen. In Montagelage, d.h. bei verbundenem Hochvolt-Batteriemodul und dem weiteren Element, liegen diese insbesondere mit jeweils korrespondierenden Verbindungsseiten unmittelbar aneinander an, und das Verbindungselement ist vollständig innerhalb der beiden Öffnungen aufgenommen. Eine derartige Anordnung ist besonders bauraumsparend. Insbesondere weisen das Hochvolt-Batteriemodul und das weitere Element ein zumindest im Bereich der Öffnung doppelwandig ausgebildetes Gehäuse auf, und das Verbindungselement ist derart in der Öffnung angeordnet, dass es mit der ersten Anschlagfläche bzw. der zweiten Anschlagfläche mit einer inneren Wand zu Anlage kommt und der Mittelabschnitt zur Hälfte zwischen der inneren Wand und der äußeren Gehäusewand aufgenommen ist.

Mit einem wie vorstehend beschriebenen Verbindungselement ist es möglich, ein Verfahren zur Herstellung einer Verbindung zwischen einem Hochvolt-Batteriemodul und einem weiteren Element durchzuführen, wobei in einem ersten Schritt eine Steckverbindung zwischen dem Verbindungselement und dem Hochvolt-Batteriemodul oder dem weiteren Element hergestellt wird und dann,
a) sofern die Verbindung im ersten Schritt mit dem Hochvolt-Batteriemodul hergestellt wurde, eine Steckverbindung mit dem weiteren Element hergestellt wird
   oder
b) sofern die Verbindung im ersten Schritt mit dem weiteren Element hergestellt wurde, eine Steckverbindung mit dem Hochvolt-Batteriemodul hergestellt wird.

Das Verfahren erfolgt insbesondere teilweise oder vollständig automatisiert mittels Robotern, welche das Hochvolt-Batteriemodul, das Verbindungselement und das weitere Element greifen bzw. halten und entlang der Steckachse (S) relativ zueinander und aufeinander zu bewegen, bis eine Steckverbindung hergestellt ist.

Mit einem wie vorstehend beschriebenen Verbindungselement ist es auch möglich, ein alternatives Verfahren zur Herstellung einer Verbindung zwischen einem Hochvolt-Batteriemodul und einem weiteren Element durchzuführen, wobei das Verbindungselement derart gegriffen bzw. gehalten wird, dass durch Aufeinander-zu-Bewegen des Hochvolt-Batteriemoduls und des weiteren Elements eine Steckverbindung gleichzeitig zwischen dem Hochvolt-Batteriemodul und dem Verbindungselement und zwischen dem weiteren Element und dem Verbindungselement hergestellt wird. Das zweite Verfahren unterscheidet sich von dem ersten Verfahren insbesondere dadurch, dass nur zwei Teile bewegt werden müssen, nämlich das Hochvolt-Batteriemodul und das weitere Element.

Auch dieses Verfahren kann weitestgehend automatisiert durchgeführt werden, wodurch Kosten und Montagezeit gespart werden können. Für weitere Vorteile in Bezug auf die beiden Verfahren wird auf die vorstehende Beschreibung verwiesen.

Weitere praktische Ausführungsformen der Erfindung sind nachfolgend im Zusammenhang mit den Zeichnungen beschrieben. Es zeigen:
- Fig. 1: eine erfindungsgemäße Anordnung eines Hochvolt-Batteriemoduls, eines Verbindungselementes und eines weiteren Elementes in einer perspektivischen Ansicht vor Herstellung einer Steckverbindung,
- Fig. 2: ein Hochvolt-Batteriemodul in einer Explosionsansicht,
- Fig. 3: ein erfindungsgemäßes Verbindungselement in einer perspektivischen Ansicht,
- Fig. 4: das Hochvolt-Batteriemodul aus Fig. 2 und das erfindungsgemäße Verbindungselement aus Fig. 3 in einer perspektivischen Ansicht vor Herstellung der Steckverbindung,
- Fig. 5: einen Ausschnitt des Hochvolt-Batteriemoduls mit elektrischer Schnittstelle in einer perspektivischen Ansicht auf die erste Verbindungsseite,
- Fig. 6: das Hochvolt-Batteriemodul ohne Gehäuse und Niedervolt-Kontakte in einer perspektivischen Ansicht gemäß Fig. 4,
- Fig. 7: das Hochvolt-Batteriemodul ohne Gehäuse in einer perspektivischen Ansicht, und
- Fig. 8: eine erfindungsgemäße Anordnung gemäß Fig. 1 nach Herstellung der Steckverbindung in einem Schnitt durch das Verbindungselement.

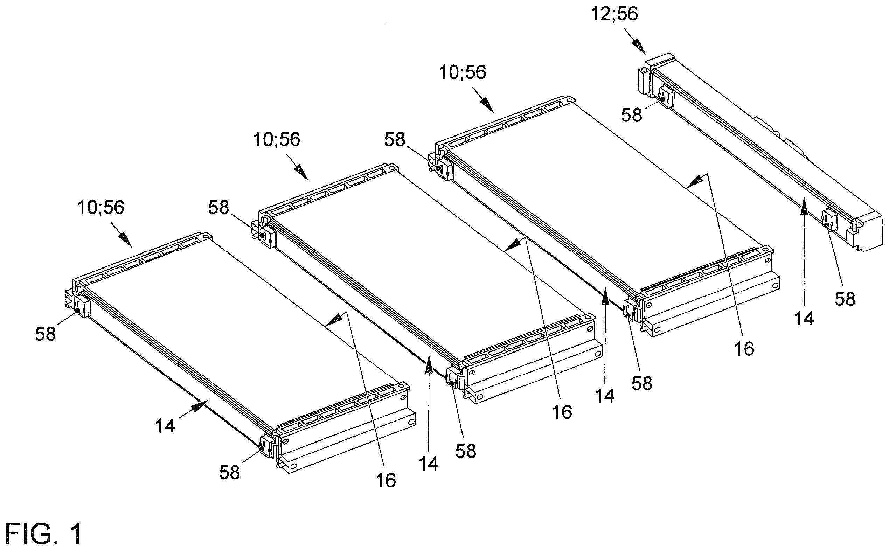

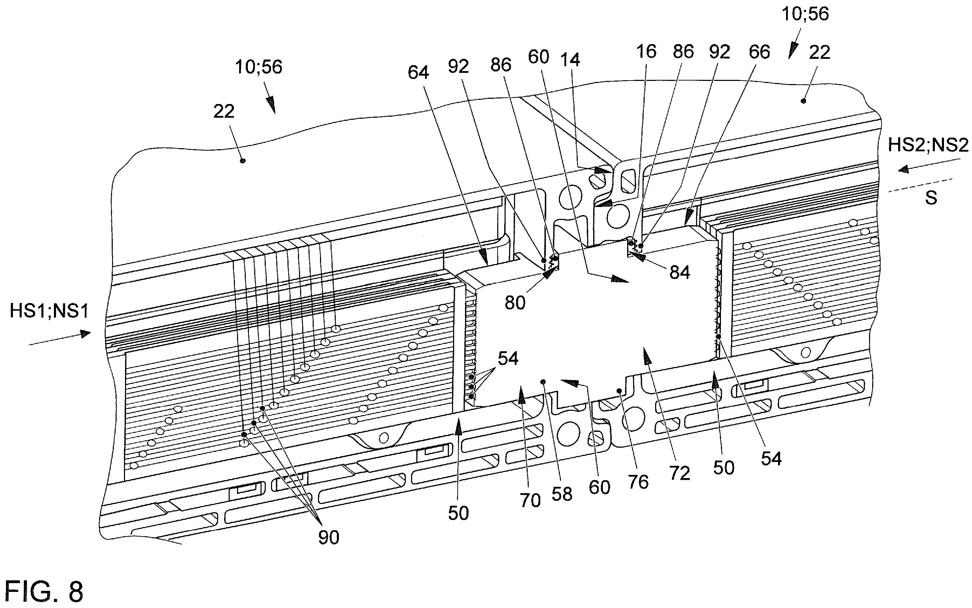

In Fig. 1 sind drei baugleiche Hochvolt-Batteriemodule 10 und eine Steuerung 12 vor der Herstellung der jeweiligen Steckverbindungen dargestellt. Zur Herstellung der Steckverbindungen werden die Hochvolt-Batteriemodule 10 und die Steuerung 12 in Steckverbindungsrichtung (S) aufeinander zu bewegt. Jedes Hochvolt-Batteriemodul 10 weist eine erste Verbindungsseite 14 und eine gegenüberliegende zweite Verbindungsseite 16 auf, wobei jeweils korrespondierende Verbindungsseiten 14, 16 bei einer Verbindung der Hochvolt-Batteriemodule 10 unmittelbar zur Anlage kommen (vgl. auch Fig. 8). Die Steuerung 12 weist ebenfalls eine erste Verbindungsseite 14 auf, welche mit einer korrespondierenden zweiten Verbindungsseite 16 eines Hochvolt-Batteriemoduls 10 unmittelbar zur Anlage kommt. Die Hochvolt-Batteriemodule 10 werden untereinander mittels Steckverbindung verbunden, und ein Hochvolt-Batteriemodul 10 ist mittels Steckverbindung mit der Steuerung 12 verbunden. Die Hochvolt-Batteriemodule 10 und die Steuerung 12 sind dabei jeweils ein weiteres Element 56 im Sinne der Erfindung.

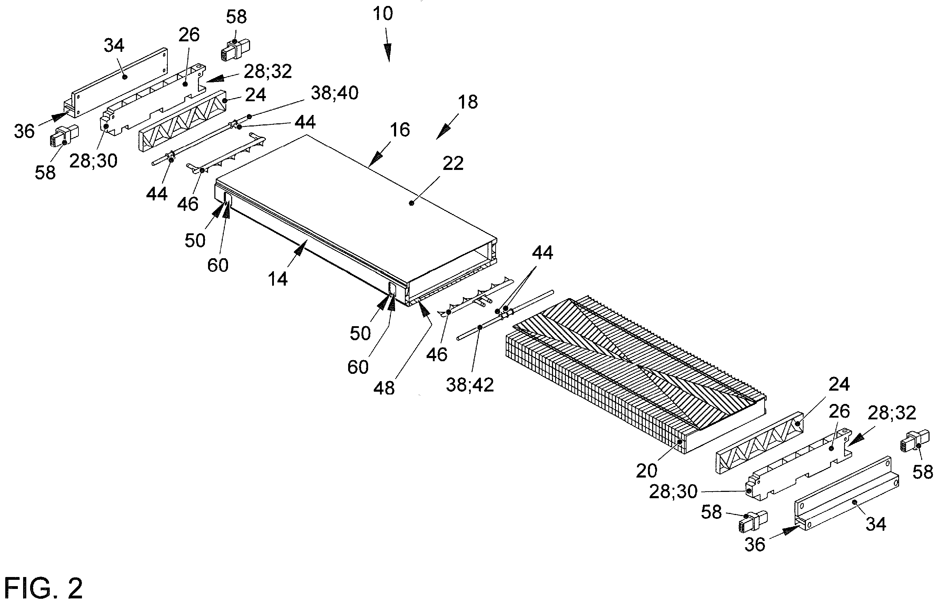

In Zusammenhang mit Fig. 2 wird im Folgenden zunächst detaillierter auf den Aufbau eines Hochvolt-Batteriemoduls 10 eingegangen.

Ein Hochvolt-Batteriemodul 10 umfasst ein Zellmodul 18, in welchem eine Vielzahl von Batteriezellen 20 (nur eine Batteriezelle ist vorliegend exemplarisch mit einem Bezugszeichen versehen) angeordnet ist. Vorliegend sind ca. 100 plattenartige Batteriezellen 20 in einer Reihe nebeneinander jeweils mit gleicher Orientierung angeordnet. Dabei sind mehrere Reihen vorgesehen, die jeweils parallel zueinander angeordnet sind. Die Batteriezellen 20 sind in dem Zellmodul 18 von einem Gehäuse 22 umgeben. Zur Festlegung der Position der Batteriezellen 20 in dem Gehäuse 22 und zur Abdichtung ist jeweils eine Dichtplatte 24 rechts und links der Batteriezellen 20 innerhalb des Gehäuses 22 angeordnet.

An den Längsseiten des Gehäuses 22 ist jeweils ein erstes Profilelement 26 angeordnet, welches sich über die gesamte Höhe und Länge des Gehäuses 22 erstreckt. Das erste Profilelement 26 ist als Hohlprofil ausgebildet und weist an seinen Stirnseiten mechanische Kopplungsmittel 28 in Form eines Vorsprungs 30 und einer Ausnehmung 32 auf. Seitlich des ersten Profilelements 26 ist ein zweites Profilelement 34 angeordnet, welches eine L-förmige Geometrie aufweist. Das zweite Profilelement 34 ist ebenfalls als Hohlprofil ausgebildet und weist mehrere Hohlräume 36 auf.

In den jeweils zweiten Profilelementen 34 ist eine Kühlmittelfluidführung 38 ausgebildet, wobei vorliegend jeweils eine Fluidleitung 40, 42 in einem Hohlraum 36 des zweiten Profilelements 34 angeordnet ist. Die eine Fluidleitung 40 dient als Zuführleitung für Kühlmittel, die andere Fluidleitung 42 als Abführleitung für Kühlmittel. Die Fluidleitungen 40, 42 für das Kühlmittel weisen jeweils Anschlüsse 44 zur Anbindung eines Kühlmittelverteilelements 46 auf, über welche das Kühlmittel in Hohlräume 48 innerhalb des Gehäuses 22 geleitet wird und damit die Batteriezellen 20 von unten gekühlt werden.

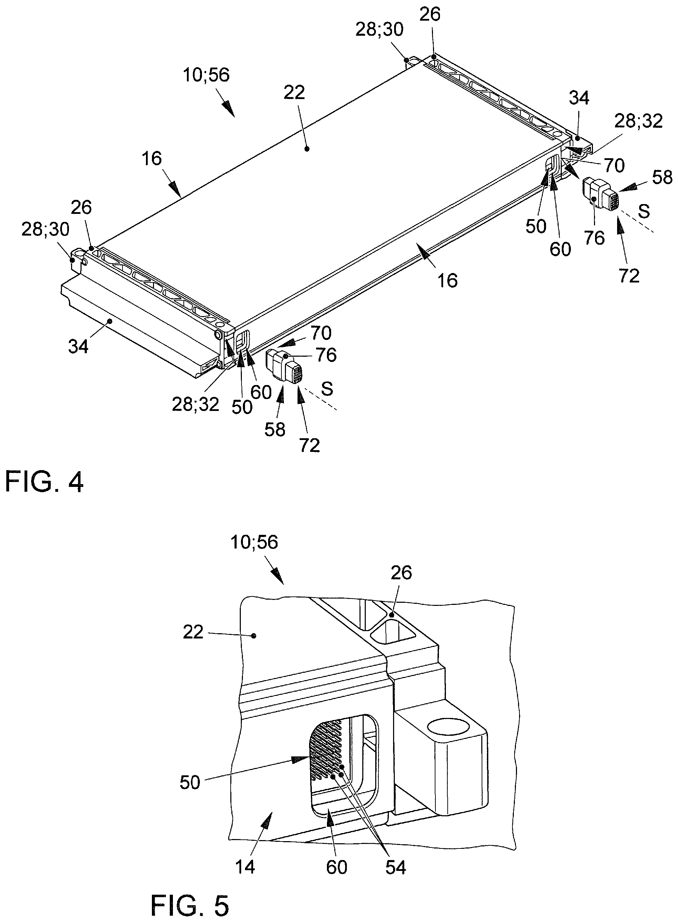

Zudem weist das Hochvolt-Batteriemodul 10 eine elektrische Schnittstelle 50 zur Kontaktierung der Batteriezellen 20 und zur Übertragung der Spannung auf. Wie im Folgenden in Zusammenhang mit den Fig. 5 bis Fig. 8 noch im Detail erläutert wird, weist das Hochvolt-Batteriemodul 10 dazu Hochvolt-Kontakte 52 und Niedervolt-Kontakte 54 auf.

Zur Herstellung einer elektrisch leitenden Steckverbindung zwischen einer elektrischen Schnittstelle 50 eines Hochvolt-Batteriemoduls 10 und einer elektrischen Schnittstelle 50 eines weiteren Elements 56 ist ein Verbindungselement 58 vorgesehen. Zur Anordnung des Verbindungselementes 58 an dem Hochvolt-Batteriemodul 10 ist in dem Gehäuse 22 an der jeweiligen Verbindungsseite 14, 16 eine Öffnung 60 ausgebildet, über welche die elektrische Schnittstelle 50 mit den Hochvolt-Kontakten 52 und den Niedervolt-Kontakten 54 zugänglich ist (vgl. auch Fig. 4 und Fig. 5).

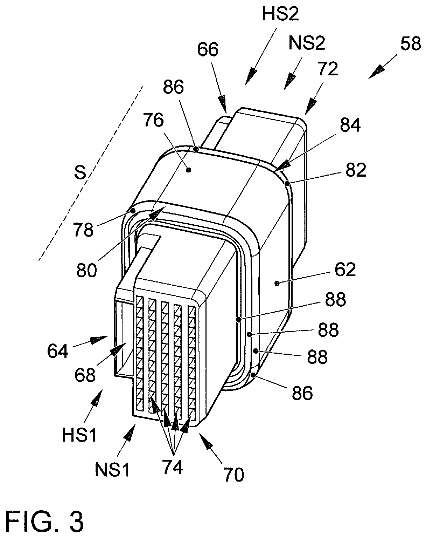

Zunächst wird im Detail auf das Verbindungselement 58 eingegangen. Wie in Fig. 3 gut zu erkennen ist, umfasst das Verbindungselement 58 einen Grundkörper 62 mit einem ersten Hochvolt-Eingang 64 und einem damit elektrisch leitend verbundenen zweiten Hochvolt-Eingang 66. Der erste Hochvolt-Eingang 64 und der zweite Hochvolt-Eingang 66 sind als Steckverbindung ausgelegt und weisen eine erste Hochvolt-Steck-Verbindungsrichtung (HS1) und eine zweite Hochvolt-Steck-Verbindungsrichtung (HS2) auf, in welcher jeweils eine Steckverbindung mit einem Hochvolt-Batteriemodul 10 oder einem weiteren Element 56 hergestellt werden kann. Wie gut erkennbar ist, sind HS1 und HS2 entgegengesetzt orientiert, liegen aber auf einer gemeinsamen Steckachse S. Der erste Hochvolt-Eingang 64 und der zweite Hochvolt-Eingang 66 sind vorliegend jeweils als Hochvolt-Kontaktöffnung 68 und damit als weibliche Steckverbindung ausgebildet.

Das Verbindungselement weist außerdem einen ersten Niedervolt-Eingang 70 mit einer ersten Niedervolt-Steck-Verbindungsrichtung (NS1) und einen zweiten Niedervolt-Eingang 72 mit einer zweiten Niedervolt-Steck-Verbindungsrichtung (NS2) auf, welche entgegengesetzt zueinander orientiert sind, aber ebenfalls die gemeinsame Steckachse S aufweisen. Der erste Niedervolt-Eingang 70 und der zweite Niedervolt-Eingang 72 sind als eine Vielzahl von Niedervolt-Kontaktöffnungen 74 und damit ebenfalls als weibliche Steckverbindung ausgebildet. Der erste Niedervolt-Eingang 70 und der zweite Niedervolt-Eingang 72 sind elektrisch leitend miteinander verbunden.

Insgesamt weist das gezeigte Verbindungselement 58 nur Kontaktöffnungen 68, 74 auf und ist damit auf beiden Seiten als weibliche Steckverbindung ausgelegt.

Der Grundkörper 62 des Verbindungselementes 58 weist einen Mittelabschnitt 76 auf, welcher quer zur Steckachse S in radialer Richtung eine größere Erstreckung aufweist als die Hochvolt-Eingänge 64, 66 und die Niedervolt-Eingänge 70,72. Insofern bildet der Mittelabschnitt 76 ein sich über den gesamten Umfang erstreckendes erstes Anschlagelement 78 mit einer ersten Anschlagfläche 80 für den ersten Hochvolt-Eingang 62 und den ersten Niedervolt-Eingang 70 und ein zweites Anschlagelement 82 mit einer zweiten Anschlagfläche 84 für den zweiten Hochvolt-Eingang 66 und den zweiten Niedervolt-Eingang 72.

Die erste Anschlagfläche 80 und die zweite Anschlagfläche 84 sind zudem mit einer Dichtung 86 versehen, welche vorliegend drei umlaufende Dichtlippen 88 aufweist.

Der Grundkörper 62 des Verbindungselementes 58 ist vorliegend einstückig aus Kunststoff hergestellt.

Im Folgenden wird im Detail auf die Ausbildung der elektrischen Schnittstelle 50 des Hochvolt-Batteriemoduls 10 und die Verbindung mit dem Verbindungselement 58 eingegangen.

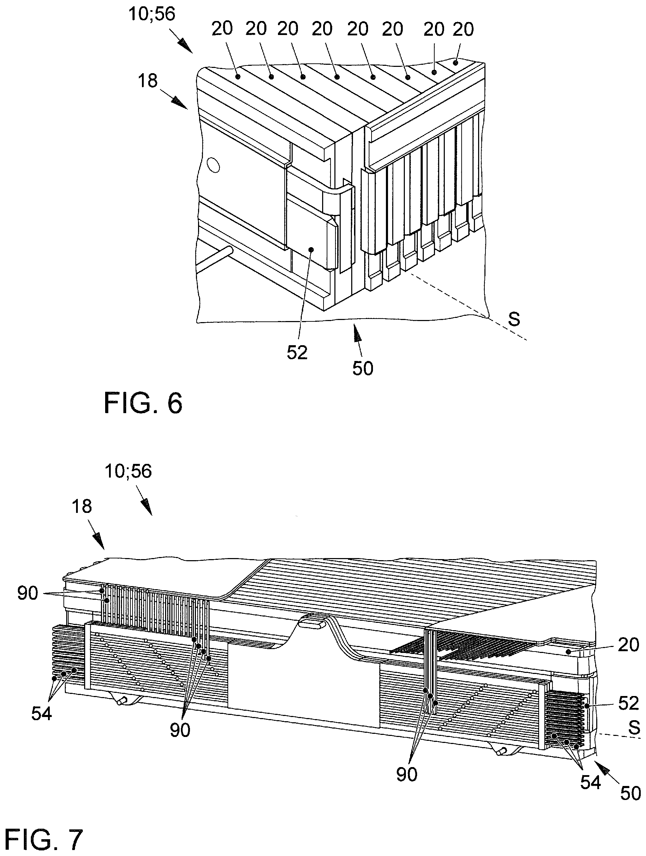

Fig. 4 und Fig. 5 zeigen das Hochvolt-Batteriemodul 10 mit der in dem Gehäuse 22 ausgebildeten Öffnung 60, in welcher die elektrische Schnittstelle 50 angeordnet ist. Der Hochvolt-Kontakt 52 ist gut in Fig. 6 und 7 zu erkennen. Der Hochvolt-Kontakt 52 ist benachbart zu den Niedervolt-Kontakten 54 angeordnet und ist als ein einzelner gegenüber den Batteriezellen 20 in Hochvolt-Steck-Verbindungsrichtung (HS1 bzw. HS2) hervorragender, plattenförmiger Kontakt ausgebildet. Über den Hochvolt-Kontakt 52 wird die Nennspannung des Hochvolt-Batteriemoduls 10 übertragen.

In Fig. 5 und Fig. 7 ist gut zu erkennen, dass das Hochvolt-Batteriemodul 10 eine Vielzahl von Niedervolt-Kontakten 54 aufweist, welche vorliegend als Pins ausgebildet sind. Jeweils ein Niedervolt-Kontakt 54 dient dabei in dem Ausführungsbeispiel zur Kontaktierung einer Batteriezelle 20 (vgl. Fig. 7). Die Kontaktierung erfolgt, indem Niedervolt-Kontakte 54 über elektrisch leitende Lamellen 90 mit den einzelnen Batteriezellen 20 verbunden sind.

In Fig. 8 sind zwei Hochvolt-Batteriemodule 10 nach Herstellung der Steckverbindung gezeigt, wobei die erste Verbindungsseite 14 eines ersten Hochvolt-Batteriemoduls 10 und eine korrespondierende zweite Verbindungsseite 16 eines zweiten Hochvolt-Batteriemoduls 10 unmittelbar aneinander anliegen.

Die Öffnungen 60 in den jeweiligen Gehäusen 22 sind derart ausgebildet, dass das Verbindungselement 58 jeweils vollständig von den beiden Öffnungen 60 aufgenommen wird. Das Verbindungelement 58 ist hier nur schematisch dargestellt. Dazu ist das Gehäuse 22 doppelwandig ausgebildet, und die Anschlagflächen 80, 84 mit den Dichtungen 86 kommen mit einer innenliegenden Wand 92 so zur Anlage, dass einem zu weiten Einführen des Verbindungselementes 58 in die Öffnungen 60 entgegengewirkt wird. Die Anordnung der Dichtungen 86 jeweils an der ersten Anschlagfläche 80 und an der zweiten Anschlagfläche 84 ermöglicht dabei, dass das Verbindungselement 58 mittig in den beiden Öffnungen 60 angeordnet ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Insbesondere wird darauf hingewiesen, dass der erste Hochvolt-Eingang, der zweite Hochvolt-Eingang, der erste Niedervolt-Eingang und/oder der zweite Niedervolt-Eingang auch als männliche Steckverbindungen ausgelegt sein können. Dabei sind alle Kombinationen von weiblichen und männlichen Steckverbindungen denkbar. Die elektrische Schnittstelle mit dem Hochvolt-Kontakt und den Niedervolt-Kontakten ist dann korrespondierend dazu ausgebildet.

### Bezugszeichenliste

- 10: Hochvolt-Batteriemodul
- 12: Steuerung
- 14: erste Verbindungsseite
- 16: zweite Verbindungsseite
- 18: Zellmodul
- 20: Batteriezelle
- 22: Gehäuse
- 24: Dichtplatte
- 26: erstes Profilelement
- 28: mechanisches Kopplungsmittel
- 30: Vorsprung
- 32: Ausnehmung
- 34: zweites Profilelement
- 36: Hohlraum
- 38: Kühlmittelfluidführung
- 40: Fluidleitung
- 42: Fluidleitung
- 44: Anschluss
- 46: Kühlmittelverteilelement
- 48: Hohlraum
- 50: elektrische Schnittstelle
- 52: Hochvolt-Kontakt
- 54: Niedervolt-Kontakt
- 56: weiteres Element
- 58: Verbindungselement
- 60: Öffnung
- 62: Grundkörper
- 64: erster Hochvolt-Eingang
- 66: zweiter Hochvolt-Eingang
- 68: Hochvolt-Kontaktöffnung
- 70: erster Niedervolt-Eingang
- 72: zweiter Niedervolt-Eingang
- 74: Niedervolt-Kontaktöffnung
- 76: Mittelabschnitt
- 78: erstes Anschlagelement
- 80: erste Anschlagfläche
- 82: zweites Anschlagelement
- 84: zweite Anschlagfläche
- 86: Dichtung
- 88: Dichtlippe
- 90: Lamelle
- 92: innenliegende Wand

## Patentansprüche

1. Verbindungselement für ein Hochvolt-Batteriemodul (10) mit einem Grundkörper (62), einem an dem Grundkörper (62) vorgesehenen ersten Hochvolt-Eingang (64) und einem an dem Grundkörper (62) vorgesehenen zweiten Hochvolt-Eingang (66), wobei der erste Hochvolt-Eingang (64) und der zweite Hochvolt-Eingang (66) elektrisch leitend miteinander verbunden sind oder die Herstellung einer elektrisch leitenden Verbindung ermöglichen, wobei der erste Hochvolt-Eingang (64) und der zweite Hochvolt-Eingang (66) jeweils als Steckverbindung ausgebildet sind, wobei die erste Hochvolt-Steck-Verbindungsrichtung (HS1) des ersten Hochvolt-Eingangs (64) und die zweite Hochvolt-Steck-Verbindungsrichtung (HS2) des zweiten Hochvolt-Eingangs (64) entgegengesetzt orientiert sind und eine gemeinsame Steckachse (S) aufweisen, wobei für den ersten Hochvolt-Eingang (64) ein quer zur ersten Hochvolt-Steck-Verbindungsrichtung (HS1) radial hervorragendes erstes Anschlagelement (78) mit einer ersten Anschlagfläche (80) vorgesehen ist und für den zweiten Hochvolt-Eingang (66) ein quer zur zweiten Hochvolt-Steck-Verbindungsrichtung (HS2) radial hervorragendes zweites Anschlagelement (82) mit einer zweiten Anschlagfläche (84) vorgesehen ist, **dadurch gekennzeichnet, dass** die erste Anschlagfläche (80) und/oder die zweite Anschlagfläche (84) jeweils durch eine Dichtung (86) gebildet ist oder jeweils mit einer Dichtung (86) versehen ist.

2. Verbindungselement nach dem vorstehenden Anspruch, **dadurch gekennzeichnet, dass** an dem Grundkörper (62) ein erster Niedervolt-Eingang (70) und ein zweiter Niedervolt-Eingang (72) vorgesehen sind, wobei der erste Niedervolt-Eingang (70) und der zweite Niedervolt-Eingang (72) jeweils als Steckverbindung ausgebildet sind und wobei die erste Niedervolt-Steck-Verbindungsrichtung (NS1) und die zweite Niedervolt-Steck-Verbindungsrichtung (NS2) entgegengesetzt orientiert sind und die gleiche Steckachse (S) aufweisen wie der erste Hochvolt-Eingang (64) und der zweite Hochvolt-Eingang (66) .

3. Verbindungselement nach einem der vorstehenden Ansprüche, **dadurch gekennzeichnet, dass** die erste Anschlagfläche (80) und die zweite Anschlagfläche (84) durch einen Mittelabschnitt (76) gebildet sind, der zwischen dem ersten Hochvolt-Eingang (64) und dem zweiten Hochvolt-Eingang (66) angeordnet ist.

4. Verbindungselement nach einem der vorstehenden Ansprüche, **dadurch gekennzeichnet, dass** der erste Hochvolt-Eingang (64) und der zweite Hochvolt-Eingang (66) jeweils als weibliches Steckverbindungselement ausgebildet sind.

5. Anordnung mindestens eines Verbindungselements (58) zwischen einem Hochvolt-Batteriemodul (10) und einem weiteren Element (56), wobei das Verbindungselement (58) einen Grundkörper (62), einen an dem Grundkörper (62) vorgesehenen ersten Hochvolt-Eingang (64) und einen an dem Grundkörper (62) vorgesehenen zweiten Hochvolt-Eingang (66) aufweist, wobei der erste Hochvolt-Eingang (64) und der zweite Hochvolt-Eingang (66) elektrisch leitend miteinander verbunden sind oder die Herstellung einer elektrisch leitenden Verbindung ermöglichen, wobei der erste Hochvolt-Eingang (64) und der zweite Hochvolt-Eingang (66) jeweils als Steckverbindung ausgebildet sind, wobei die erste Hochvolt-Steck-Verbindungsrichtung (HS1) des ersten Hochvolt-Eingangs (64) und die zweite Hochvolt-Steck-Verbindungsrichtung (HS2) des zweiten Hochvolt-Eingangs (64) entgegengesetzt orientiert sind und eine gemeinsame Steckachse (S) aufweisen, **dadurch gekennzeichnet, dass** das Hochvolt-Batteriemodul (10) und das weitere Element (56) durch eine jeweilige Steckverbindung mit dem Verbindungselement (58) mittels des ersten Hochvolt-Eingangs (64) und des zweiten Hochvolt-Eingang (66) des Verbindungselements (58) unmittelbar elektrisch miteinander gekoppelt sind.

6. Anordnung nach dem vorstehenden Anspruch, **dadurch gekennzeichnet, dass** das Hochvolt-Batteriemodul (10) und das weitere Element (56) jeweils mindestens eine Öffnung (60) aufweisen, in welche das Verbindungselement (58) jeweils eingesteckt ist.

## Claims

1. Connecting element for a high-voltage battery module (10), the connecting element comprising a main body (62), a first high-voltage input (64) provided on the main body (62), and a second high-voltage input (66) provided on the main body (62), the first high-voltage input (64) and the second high-voltage input (66) being electrically conductively interconnected or allowing the establishment of an electrically conductive connection, the first high-voltage input (64) and the second high-voltage input (66) each being in the form of a plug connection, the first high-voltage plug connection direction (HS1) of the first high-voltage input (64) and the second high-voltage plug connection direction (HS2) of the second high-voltage input (64) being oriented counter to each other and having a common plug axis (S), a first stop element (78) which projects radially transversely to the first high-voltage plug connection direction (HS1) and has a first stop surface (80) being provided for the first high-voltage input (64), and a second stop element (82) which projects radially transversely to the second high-voltage plug connection direction (HS2) and has a second stop surface (84) being provided for the second high-voltage input (66), **characterized in that** each of the first stop surface (80) and/or the second stop surface (84) is formed by a seal (86) or is provided with a seal (86).

2. Connecting element according to the preceding claim,
**characterized in that** a first low-voltage input (70) and a second low-voltage input (72) are provided on the main body (62), the first low-voltage input (70) and the second low-voltage input (72) each being in the form of a plug connection, and the first low-voltage plug connection direction (NS1) and the second low-voltage plug connection direction (NS2) being oriented counter to each other and having the same plug axis (S) as the first high-voltage input (64) and the second high-voltage input (66).

3. Connecting element according to any of the preceding claims,
**characterized in that** the first stop surface (80) and the second stop surface (84) are formed by a central portion (76) which is located between the first high-voltage input (64) and the second high-voltage input (66).

4. Connecting element according to any of the preceding claims, **characterized in that** the first high-voltage input (64) and the second high-voltage input (66) are each in the form of a female plug connector element.

5. Arrangement of at least one connecting element (58) between a high-voltage battery module (10) and a further element (56), the connecting element (58) having a main body (62), a first high-voltage input (64) provided on the main body (62), and a second high-voltage input (66) provided on the main body (62), the first high-voltage input (64) and the second high-voltage input (66) being electrically conductively interconnected or allowing the establishment of an electrically conductive connection, the first high-voltage input (64) and the second high-voltage input (66) each being in the form of a plug connection, the first high-voltage plug connection direction (HS1) of the first high-voltage input (64) and the second high-voltage plug connection direction (HS2) of the second high-voltage input (66) being oriented counter to each other and having a common plug axis (S), **characterized in that** the high-voltage battery module (10) and the further element (56) are directly electrically coupled to each other by a plug connection to the connecting element (58) by means of the first high-voltage input (64) and the second high-voltage input (66) of the connecting element (58).

6. Arrangement according to the preceding claim, **characterized in that** the high-voltage battery module (10) and the further element (56) each have at least one opening (60) into which the connecting element (58) is inserted.

## Revendications

1. Élément de connexion pour un module de batterie haute tension (10), comportant un corps de base (62), une première entrée haute tension (64) prévue sur le corps de base (62) et une seconde entrée haute tension (66) prévue sur le corps de base (62), dans lequel la première entrée haute tension (64) et la seconde entrée haute tension (66) sont connectées entre elles de manière électriquement conductrice ou permettent l'établissement d'une connexion électriquement conductrice, dans lequel la première entrée haute tension (64) et la seconde entrée haute tension (66) sont respectivement conçues en tant que moyen de connexion enfichable, dans lequel la première direction de connexion d'enfichage haute tension (HS1) de la première entrée haute tension (64) et la seconde direction de connexion d'enfichage haute tension (HS2) de la seconde entrée haute tension (66) sont orientées en sens opposés et présentent un axe d'enfichage (S) commun, dans lequel un premier élément de butée (78) faisant saillie radialement transversalement à la première direction de connexion d'enfichage haute tension (HS1) et comportant une première surface de butée (80) est prévu pour la première entrée haute tension (64), et un second élément de butée (82) faisant saillie radialement transversalement à la seconde direction de connexion d'enfichage haute tension (HS2) et comportant une seconde surface de butée (84) est prévu pour la seconde entrée haute tension (66), **caractérisé en ce que** la première surface de butée (80) et/ou la seconde surface de butée (84) sont respectivement formées par un joint d'étanchéité (86) ou sont respectivement pourvues d'un joint d'étanchéité (86).

2. Élément de connexion selon la revendication précédente,
**caractérisé en ce qu'**une première entrée basse tension (70) et une seconde entrée basse tension (72) sont prévues sur le corps de base (62), dans lequel la première entrée basse tension (70) et la seconde entrée basse tension (72) sont respectivement conçues en tant que moyen de connexion enfichable, et dans lequel la première direction de connexion d'enfichage basse tension (NS1) et la seconde direction de connexion d'enfichage basse tension (NS2) sont orientées en sens opposés et présentent le même axe d'enfichage (S) que la première entrée haute tension (64) et la seconde entrée haute tension (66).

3. Élément de connexion selon l'une des revendications précédentes, **caractérisé en ce que** la première surface de butée (80) et la seconde surface de butée (84) sont formées par une section centrale (76) disposée entre la première entrée haute tension (64) et la seconde entrée haute tension (66).

4. Élément de connexion selon l'une des revendications précédentes, **caractérisé en ce que** la première entrée haute tension (64) et la seconde entrée haute tension (66) sont respectivement conçues en tant qu'élément de connexion enfichable femelle.

5. Agencement d'au moins un élément de connexion (58) entre un module de batterie haute tension (10) et un autre élément (56), dans lequel l'élément de connexion (58) présente un corps de base (62), une première entrée haute tension (64) prévue sur le corps de base (62) et une seconde entrée haute tension (66) prévue sur le corps de base (62), dans lequel la première entrée haute tension (64) et la seconde entrée haute tension (66) sont connectées entre elles de manière électriquement conductrice ou permettent l'établissement d'une connexion électriquement conductrice, dans lequel la première entrée haute tension (64) et la seconde entrée haute tension (66) sont respectivement conçues en tant que moyen de connexion enfichable, dans lequel la première direction de connexion d'enfichage haute tension (HS1) de la première entrée haute tension (64) et la seconde direction de connexion d'enfichage haute tension (HS2) de la seconde entrée haute tension (66) sont orientées en sens opposés et présentent un axe d'enfichage (S) commun, **caractérisé en ce que** le module de batterie haute tension (10) et l'autre élément (56) sont directement couplés électriquement l'un à l'autre par l'intermédiaire d'une connexion enfichable respective avec l'élément de connexion (58) au moyen de la première entrée haute tension (64) et de la seconde entrée haute tension (66) de l'élément de connexion (58).

6. Agencement selon la revendication précédente, **caractérisé en ce que** le module de batterie haute tension (10) et l'autre élément (56) présentent respectivement au moins une ouverture (60) dans laquelle est respectivement enfiché l'élément de connexion (58).
